Europäisches Patentamt

European Patent Office

Office européen des brevets

(11) Publication number: **0 371 754 B1**

# EUROPEAN PATENT SPECIFICATION

(45) Date of publication of patent specification: **02.03.94** (51) Int. Cl.5: **B60C 9/20**

(21) Application number: **89312349.7**

(22) Date of filing: **28.11.89**

(54) **Radial tyre.**

(30) Priority: **30.11.88 JP 302974/88**

(43) Date of publication of application:
**06.06.90 Bulletin 90/23**

(45) Publication of the grant of the patent:
**02.03.94 Bulletin 94/09**

(84) Designated Contracting States:
**DE FR GB**

(56) References cited:
**FR-A- 2 351 809**
**GB-A- 2 015 937**
**US-A- 2 958 359**

(73) Proprietor: **SUMITOMO RUBBER INDUSTRIES LIMITED**
**1-1 Tsutsuicho 1-chome**
**Chuo-ku**
**Kobe-shi Hyogo-ken(JP)**

(72) Inventor: **Kawamura, Kazuhiko**
**3-1-45 Suigencho**
**Toyota-shi Aichi-ken(JP)**

(74) Representative: **Stewart, Charles Geoffrey**
**SP TYRES UK LIMITED**
**Tyre Technical Division**
**Fort Dunlop, Erdington, Birmingham B24 9OT**
**(GB)**

**Description**

The present invention relates to a radial tyre for heavy duty and high speed vehicles which is improved in durability of the tread portion.

Recently, service conditions in which heavy duty high speed radial tyres, especially aircraft tyres are used, have become more severe according to the increased tyre load resulting from the increased aircraft size and weight, and the increased landing and take-off speeds due to the increase in the flight speed.

One of them is the so-called taxi condition in which the aircraft tyres are run between the runway and the parking spot at a low speed for a long time under heavy leads. In the taxi condition, the tyre temperature is raised which affects the durability of the tyre.

Another is the so-called taking-off and landing condition in which the rotating speed of the aircraft tyres is increased from a low speed to a superhigh speed over 300 km/h. In such conditions, the tread portion is suddenly swollen by centrifugal force. Moreover, a large deflection of about 25 to 35% is caused in the radial direction of the tyre by the impact of landing.

On the other hand, for aircraft tyres, a carcass having a cross ply structure was widely employed, but due to its small rigidity in the tread portion and heavy weight, the cross ply structure is not desirable from the aspects of resistance to wear and heat generation. More recently it has become the practice to use radial ply tyres in which a belt made of high elastic modulus cords arranged at a small angle to the tyre equator is disposed radially outside a radial carcass.

In such radial tyres for aircraft, in order to improve tyre durability, it has been attempted
(a) to prevent lifting of the tread portion by providing a hoop effect by means of disposing a band outside the belt in the same way as is used in high speed passenger car tyres, and
(b) to prevent breakage of the bead portions by lessening the shearing stress in the bead portion by using a double layered bead apex made of a hard rubber and a soft rubber as used in heavy duty tyres for trucks and buses.

However, even if these technologies for high speed passenger car tyres and heavy duty tyres are introduced into the heavy duty high speed aircraft radial tyres it is difficult to achieve a sufficient tyre durability to satisfy both the durability against heavy load and the durability against superhigh speed.

It is therefore an object of the present invention to provide a heavy duty high speed radial tyre which is improved in both heavy load durability and superhigh speed durability.

The present invention is based on the discovery that the distribution of the amount of tread lift by the superhigh speed rotation, affects the superhigh speed durability, and that by making the amount of lift in the tread shoulders smaller than that in the tread crown, temperature rise in the tread shoulders and the beads is lessened, and the high speed durability is improved. Also this results in a lowering of bead durability problems due to large load in low speed running.

According to the present invention a heavy duty high speed radial tyre comprises a radial carcass having at least one ply of cords arranged at an angle of 70 degrees to 90 degrees to the equator of the tyre and turned up at both edges around bead cores to be secured thereto, and a belt composed of at least two plies of parallel cords arranged at an angle of 0 degrees to 15 degrees to the tyre equator characterised in that each belt ply is composed of a central strip and two lateral strips forming a joint between the central strip and each of the two lateral strips wherein the joints of said at least two plies are shifted in the axial direction of the tyre, and each belt ply is provided with a different cord count, a different cord initial modulus of elasticity and a different cord thickness between the central strip and the two lateral strips so that the 1000 kgf rigidity of the belt is smaller in the central part than in the lateral parts where the 1000 kgf rigidity is defined as the ratio of the force to the resultant elongation when the belt is circumferentially pulled by a force of 1000 kgf per unit axial width of 1 cm.

Accordingly, even if the running speed is such a superhigh speed as over 300 km/h, the bulge-out in the lateral or shoulder parts of the tread is made smaller than that in the central part. As a result, the temperature rise of the tyre in the lateral parts is restricted. Further, by reducing the bulge-out in the lateral parts, the stress acting on the bead portions is lessened, and the temperature rise in the bead portions is as a result also lowered, so that the bead durability is enhanced.

As well as the prevention of bead damage in very high speed conditions the invention can contribute to prevention of bead damage in the heavy load condition such as the taxi condition, and also to an improvement in the general durability of the tread and bead portions. Thus, in addition to the superhigh speed durability, the heavy load durability is also enhanced.

On the contrary, if the bulge-out of the lateral parts is larger than that of the central part, the strain in the lateral parts increases to raise the temperature, and the increase in the strain in the lateral parts causes an increase in the strain in the bead portions and in the heat generation, and as a result the bead durability is impaired.

In order to increase the bulge-out of the central part, if the weight of this part is increased rather than the lateral parts, the centrifugal force acting on the central part becomes large, and the weight of the entire tyre is increased and the structure is complicated.

Instead, therefore, in the heavy duty high speed radial tyre of the present invention, the 1000 kgf rigidity R is varied between the central part and the lateral parts without making a weight difference between them.

Also it is found that the increase in the bulge-out of the central part is effective to restrict the occurrence of a standing wave in the tyre at high speed.

An embodiment of the present invention will now be described in detail by way of example only in conjunction with the drawings, in which;

Figure 1 is a sectional view showing an embodiment of the present invention;

Figure 2 is a sectional view schematically showing the belt thereof; and

Figures 3(a) to (c) are sectional views each showing a belt ply arrangement.

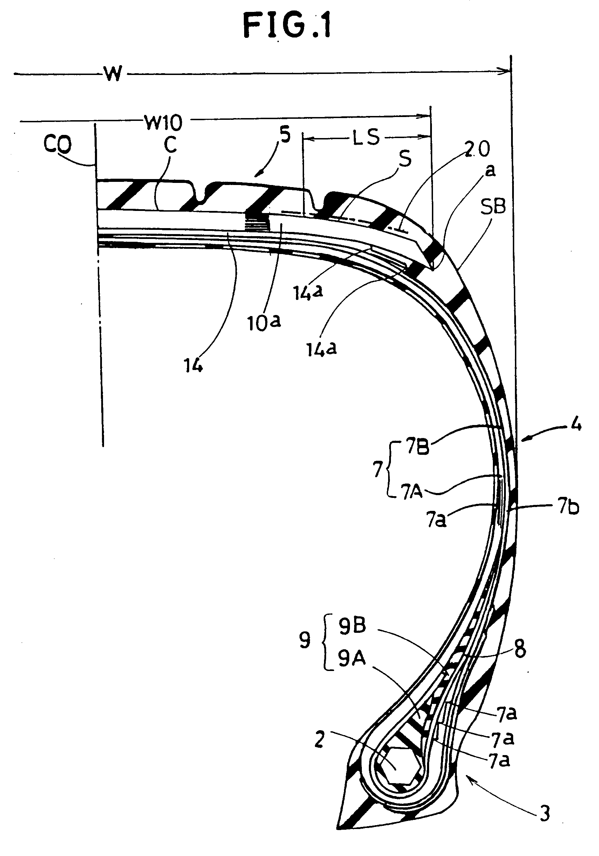

In Figure 1, the tyre 1 of the invention is an aircraft radial tyre of size 45x17 R20 inflated to its regular pressure.

The tyre 1 has a pair of bead portions 3 with a bead core 2, a sidewall portion 4 extending radially outwardly from each bead portion, and a tread portion 5 extending between the outer ends of the sidewall portions. The tyre is provided with a radial carcass 7 extending between the bead portions 3 through the sidewall portions 4 and the tread portion 5.

The carcass 7 is composed of an inner layer 7A and an outer layer 7B. The inner layer 7A consists of a plurality of, for example, four carcass plies 7a turned up around the bead cores 3 from the axially inside to the outside thereof. The outer layer 7B consists of a plurality of, for example, two carcass plies 7b extending along the outside of the turned up portion of the inner layer 7A and turned up around the bead cores 3 from the outside to the inside thereof.

The carcass cords are laid radially at an angle of 70 degrees to 90 degrees to the equator of the tyre, and the carcass cords are inclined reversely between the adjacent carcass plies with respect to the radial direction of the tyre so as to cross with each other.

Between the carcass 7 and each bead core 3, a covering layer 8 is disposed to prevent the carcass from abrasion due to its movements around the bead core 2 along with the repeated deformation of the tyre.

Above the bead core 3, a bead apex 9 made of a tapered rubber member extending radially outwardly over the upper end of the covering layer 8 is disposed, thereby dispersing the stress of the carcass 7 turned up portions due to its deflection. The bead apex 9 is composed of a hard rubber forming a lower part 9A and a soft rubber forming an upper part 9B. It is also possible to provide a chafer (not shown) for preventing rim chafing on the outer surface of the bead 3.

In the tread portion 5, a belt 10 is disposed radially outside the carcass 7 and inside a rubber tread, and further in this embodiment a cut breaker 14 is disposed between the belt and the carcass.

The belt 10 is composed of a plurality of, for example, eight plies 10a. The belt width W10 between the outermost edges (a) is in the range of about 70 to 85% of the tyre overall section width W. The surface of the outer edge is formed in parallel with the outer surface SB of the tyre, and the minimum distance between the outer edge and the outer surface SB is set in a range of 3 to 8 mm. The width W10 of the belt is wider than the width of the cut breaker 14 which is composed of two plies 14a, a narrower outside ply and a wider inside ply.

The belt 10 is provided with different 1000 kgf rigidities Rc and Rs between the central part C centred on the tire's equator CO and the lateral parts S located one on each side of the central part, and the 1000 kgf rigidity Rs in the lateral parts S is larger than the 1000 kgf rigidity Rc in the central part C, and the Rs/Rc ratio is not less than 1.2 and not more than 3.0. The 1000 kgf rigidity is defined as the ratio of the force to the resultant elongation when the belt is circumferentially pulled by a force of 1000 kgf per unit axial width of material of 1 cm.

Here, each lateral part S is defined between each of the outermost edges (a) and a position a distance LS inward thereof in the axial direction of the tyre, and the distance LS is more than 1/5 and less than 1/3 times the above-mentioned overall width W10 of the belt 10.

Further, between the central part and each of the lateral parts, a transitional part V for which the 1000 kgf rigidity Rv is between Rs and Rc is preferably formed.

In order to provide the difference in the 1000 kgf rigidity R between the central part C and the lateral parts S, it is possible to provide a rigidity difference either in all of the belt plies 10a or in some of the belt plies 10a.

EP 0 371 754 B1

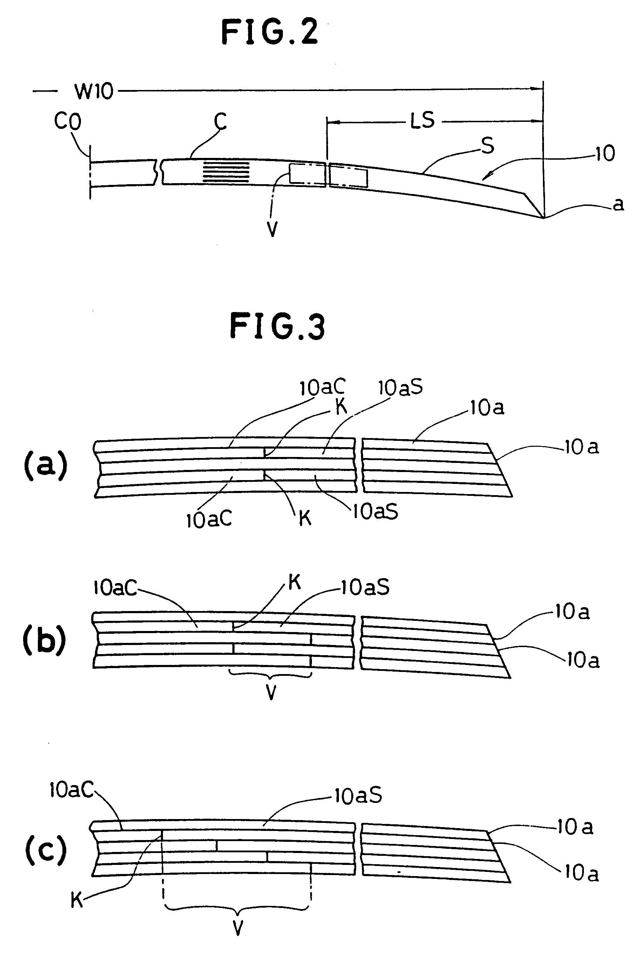

Figure 3(a) shows an example of the belt, in which some of the belt plies 10a, the second and fourth belt plies are each composed of a central strip 10aC having a lower rigidity and two lateral strips 10aS having a higher rigidity jointed one on each side of the central strip, whereby the 1000 kgf rigidity is turned at their joints K.

Figure 3(b) shows another example of the belt, in which the first to fourth plies are composed of a central strip 10aC and lateral strips 10aS, and their joints K are shifted in the axial direction of the tyre so that the joints in the second and fourth plies are located axially inwards of the joints in the first and third plies.

Figure 3(c) shows a modification of the belt shown in Figure 3(b), in which the joints K are gradually shifted so that the further radially inwards the ply is located then the further axially outwards the joint is located.

By shifting the joints K as mentioned above, the transitional part V is formed between the axially outermost joint and the innermost joint.

Further, by disposing a strip having a medium rigidity between a central strip having lower rigidity and each lateral strip having a higher rigidity, the transitional part V can be formed.

In order to provide the central and lateral strips 10aC and 10aS with a rigidity difference, different kinds of belt cords can be used. Alternatively, if the same kind of cords are used, the cord density or end count, the initial modulus of elasticity, and/or the cord thickness may be changed between them.

When the heavy duty high speed radial tyre of the invention is an aircraft tyre, organic fibre cords such as nylon, polyester, or aromatic polyamide are preferably used for the belt.

Further, hybrid cords made of different organic fibre materials can be used. For example, an organic fibre cord having a so-called skin core structure comprising a core made of polyester filaments and an outside part, that is a skin, made of nylon filaments, is preferably used. by using such hybrid cords, the rigidity and the heat shrink properties are from the polyester core, and good adhesion is provided by the nylon skin. The nylon is Nylon 6, and the blending ratio (polyester/nylon) of the polyester filaments to nylon filaments is preferably not less than 30/70 and not more than 10/90.

When the same size and same material cords are used for the central part and the lateral parts, the rigidity difference is formed by changing the cord end count, and in this case the ratio $Ts/Tc$ of the count $Ts$ in the lateral parts $S$ to the count $Tc$ in the central part $C$ is in the range of 1.1 to 3.0. Incidentally, the count is expressed by the number of cords per 5 cm width in the axial direction of the tyre. If the ratio $Tc/Ts$ is smaller than 1.1, it is difficult to provide the above-mentioned rigidity difference. If the ratio exceeds 3.0, the cords are located too closely to each other so as to lower the bonding strength with the rubber, or the cords are too scarce in the central part $C$ or in the central strip 10aC so as to excessively lower the rigidity of the central part.

Further, while using same materials cords, the rigidity difference can be formed by changing the initial modulus of elasticity. At this time, the ratio $Es/Ec$ of the initial modulus of elasticity $Es$ of the cords used in the lateral strip to the initial modulus of elasticity $Ec$ of the cords used in the central strip $C$ is set in the range of 1.1 to 2.0. The initial modulus of elasticity is specified as in JIS-L1017, and it is defined as the modulus of elasticity at the origin of the load-elongation curve. To vary the initial modulus of elasticity, the cord thickness, treatment, and/or the number of twists should be changed. If the ratio $Es/Ec$ is smaller than 1.1, it is difficult to have the desired difference in the 1000 kg rigidity $R$ between the lateral parts $S$ and the central part $C$. When exceeding 2.0, the rigidity difference between the strips 10aS and 10aC becomes excessive, and a step difference is formed when expanding, which is not desired.

If the thickness is considered meanwhile, the ratio $Ds/Dc$ of the thickness $Ds$ of the cords used in the lateral strip 10aS to the thickness $Dc$ of the cord used in the central strip 10aC is set in a range of 1.1 to 1.5. If the ratio is smaller than 1.1, it is difficult to have a specified difference in the 1000 kgf rigidity $R$ between the outside part $S$ and middle part $C$. If exceeding 1.5, the difference in thickness becomes excessive between the adjacent strips 10aS and 10aC, and deviation is likely to take place due to tyre inflation, and the uniformity in the axial direction of the tyre is impaired

Furthermore, when the rigidity difference is formed by using different material cords in the lateral strips 10aS of the outside part $S$ and the central strip 10aC of the central part $C$, for example, nylon cords are used as the central strip cords, and polyester cords, rayon cords, or aromatic polyamide cords are used as the lateral strip cord, the 1000 kg rigidity $Rs$ of the lateral parts $S$ can be set larger than the 1000 kgf rigidity $Rc$ of the central part $C$.

In order to set the ratio $Rs/Rc$ in the above-mentioned range of 1.2 to 3.0, the cord count ratio $Rs/Tc$, the initial modulus ratio $Es/Ec$, and/or the cord thickness ratio $Ds/Dc$ can be selectively limited in the above-mentioned ranges regardless of cord materials.

4

In this way, by setting the 1000 kgf rigidity Rs of the lateral parts S larger than that of the central part C, the amount of the bulge-out in the lateral parts S is lessened rather than the central part C. As a result, the strain in the lateral parts S is decreased, and the temperature rise due to strain is lowered, and therefore the strength of the tread portion is increased and the superhigh speed durability is improved.

Moreover, the decrease in the strain in the lateral parts S also contributes to a reduction in the compressive stress of the carcass cords caused around the upper edge of the rim flange when the bead portion is bent. By this lessened strain, ply separation and breakage can be prevented, and heat generation is lowered to improve bead durability. This is effective also to improve the large load durability in the taxi condition as mentioned above.

Meanwhile, the increase in the bulge-out amount in the central part increases the apparent rigidity in this part, and this contributes to the suppression of standing waves.

Furthermore, in the heavy duty high speed radial tyre of the invention, various modifications are possible, for example, as shown by a single dot chain line in Figure 1, an auxiliary layer 20 can be disposed on the lateral parts of the belt to further enhance the circumferential rigidity of those part.

Test tyres of size 46x10 R20 were experimentally fabricated according to the specifications given in Table 1 and the structure shown in Figure 1, and tested for durability, and temperature rise in the lateral part and bead portion. The test results are shown in Table 1.

In the temperature rise test, each tyre was inflated to its regular pressure and loaded to 150% of the normal load, and then a take-off simulation test was conducted by using a drum tester at a rotating speed corresponding to 300 km/h. The temperature of the lateral part was measured near the belt edge, and the bead temperature was measured at a position axially inward of a contact point where the outside of the bead starts to contact with the rim flange and near the inside reinforcement layer.

As apparent from Table 1, the temperature was lowered in Examples 1 and 2, as compared with Reference.

In the durability test, each tyre was run continuously in the same conditions as above, and the time until the tyre was broken down was measured as the durability. The results are also shown in Table 1 using an index based on an assumption that that of Reference is 100. The larger the index, the better the durability performance. Obviously the results show that the durability is improved in Examples 1, 2 as compared with Reference.

As described above, in the present invention, as the 1000 kgf rigidity Rc of the central part of the tread is set smaller than the 1000 kgf rigidity Rs of the lateral parts, the bulge-out in the lateral parts is reduced, and accordingly the strain acting on the bead portions is reduced, so that both high speed durability and large load durability can be improved.

The present invention is preferably applied to aircraft tyres.

TABLE 1

| | Example 1 | Example 2 | Reference |
|---|---|---|---|
| Carcass | Nylon | Nylon | Nylon |
| **Belt** | | | |
| Material | Nylon | Nylon | Nylon |
| LS/W | 0.4 | 0.4 | ---- |
| Central part | | | |
|   Thickness | 1680d | 1680d | 1680d |
|   Count | 36 ends/5cm | 32 ends/5cm | 36 ends/5cm |
|   Elongation at 15 kgf | 10 % | 12 % | 10 % |
| Lateral part | | | |
|   Thickness | 1890d | 1890d | 1680d |
|   Count | 39 ends/5cm | 39 ends/5cm | 36 ends/5cm |
|   Elongation at 15 kgf | 7 % | 6 % | 10 % |
| Rs/Rc | 1.5 | 2.0 | 1.0 |
| Temperature | | | |
|   Shoulder | 94°C | 80°C | 112°C |
|   Bead | 123°C | 112°C | 135°C |
| Durability | 115 | 130 | 100 |

## Claims

1. A heavy duty high speed radial tyre comprising a radial carcass (7) having at least one ply (7A,7B) of cords arranged at an angle of 70 degrees to 90 degrees to the equator (CO) of the tyre and turned up at both edges around bead cores (3) to be secured thereto, and a belt (10) composed of at least two plies (10A) of parallel cords arranged at an angle of 0 degrees to 15 degrees to the tyre equator (CO) characterised in that each belt ply (10A) is composed of a central strip (10aC) and two lateral strips (10aS) forming a joint (K) between the central strip (10aC) and each of the two lateral strips (10aS) wherein the joints (K) of said at least two plies (10a) are shifted in the axial direction of the tyre, and each belt ply (10a) is provided with a different cord count, a different cord initial modulus of elasticity and a different cord thickness between the central strip (10aC) and the two lateral strips (10aS) so that the 1000 kgf rigidity of the belt (10) is smaller in the central part (C) than in the lateral parts (S) where the 1000 kgf rigidity is defined as the ratio of the force to the resultant elongation when the belt is circumferentially pulled by a force of 1000 kgf per unit axial width of 1 cm.

2. A tyre according to claim 1 characterised in that the axial width Ws of each lateral part (S) is not less than 1/5 and not more than 1/3 of the overall axial width (Wb) of the belt, and the rigidity ratio (Rs/Rc) of the 1000 kgf rigidity (Rs) in the lateral parts (S) to the 1000 kgf rigidity (Rc) in the central part (C) is not less than 1.2 and not more than 3.0.

3. A tyre according to claim 2 characterised in that the belt (10) includes at least one ply in which the count ratio Ts/Tc of the cord count Ts in the lateral parts (S) to the cord count Tc in the central part (C) is not less than 1.1 and not more than 3.0.

EP 0 371 754 B1

**4.** A tyre according to claim 2 characterised in that the initial modulus ratio Es/Rc of the initial modulus of elasticity of the cords in the lateral parts Es to the initial modulus of elasticity of the cords in the central part Ec is not less than 1.1 and not more than 2.2.

**5.** A tyre according to claim 2 characterised in that the belt (10) includes at least one ply in which the thickness ratio Ds/Dc of the cord thickness Ds of the cords in the lateral parts (S) to the cord thickness Dc of the cords in the central part (C) is not less than 1.1 and not more than 1.5.

**6.** A tyre according to claim 2 characterised in that the belt (10) includes at least one ply formed by using different materials for the belt cords in the lateral parts (S) and the belt cords in the central part (C).

**7.** A tyre according to any of claims 1 to 6 characterised in that the joints (K) in the belt plies (10A) are shifted such that the further radially inwards the belt ply (10A) is located then the further axially outwards the joint (K) is located.

**8.** A tyre according to any of claims 1 to 6 characterised in that considered sequentially from the radially innermost first belt ply (10A) to the radially outermost belt ply, the joints (K) of odd numbered belt plies are located axially outwardly of the joints of the even numbered belt plies.

**Patentansprüche**

**1.** Ein Schwerlast-Hochgeschwindigkeits-Radialreifen, der eine radiale Karkasse (7) mit zumindest einer Lage (7A, 7B) von Korden, die in einem Winkel von 70° bis 90° zum Äquator (CO) des Reifens angeordnet und bei beiden Rändern um die Wulstkerne (3) hochgeschlagen sind, um daran befestigt zu sein, und einen Gürtel (10), der aus zumindest zwei Lagen (10A) paralleler Korde zusammengesetzt ist, die in einem Winkel von 0° bis 15° zu dem Reifenäquator (CO) angeordnet sind, umfaßt,
dadurch **gekennzeichnet,**
daß jede Gürtellage (10A) aus einem Zentralstreifen (10aC) und zwei Lateralstreifen (10aS) zusammengesetzt ist, die eine Verbindungsstelle (K) zwischen dem Zentralstreifen (10aC) und jedem der zwei Lateralstreifen (10aS) bilden, worin die Verbindungsstellen (K) von den zumindest zwei Lagen (10a) in der axialen Richtung des Reifens verschoben sind, und jede Gürtellage (10a) mit einem verschiedenen Kordzählwert, einem verschiedenen anfänglichen Kordelastizitätsmodul und einer unterschiedlichen Korddicke zwischen dem Zentralstreifen (10aC) und den zwei Lateralstreifen (10aS) vorgesehen ist, so daß die 1000 kp-Steifheit des Gürtels (10) in dem Zentralteil (C) kleiner als in den Lateralteilen (S) ist, wobei die 1000 kp-Steifheit als das Verhältnis der Kraft zu der resultierenden Ausdehnung definiert ist, wenn der Gürtel durch eine Kraft von 1000 kp pro axialer Einheitsbreite von 1 cm in Umfangsrichtung gezogen wird.

**2.** Ein Reifen nach Anspruch 1,
dadurch **gekennzeichnet,**
daß die Axialbreite Ws von jedem Lateralteil (S) nicht weniger als 1/5 und nicht mehr als 1/3 der axialen Gesamtbreite (Wb) des Gürtels beträgt, und das Steifheitsverhältnis (Rs/Rc) der 1000 kp-Steifheit (Rs) in den Lateralteilen (S) zu der 1000 kp-Steifheit (Rc) in dem Zentralteil (C) nicht weniger als 1,2 und nicht mehr als 3,0 beträgt.

**3.** Ein Reifen nach Anspruch 2,
dadurch **gekennzeichnet,**
daß der Gürtel (10) zumindest eine Lage umfaßt, in welcher das Zählwertverhältnis Ts/Tc des Kordzählwerts Ts in den Lateralteilen (S) zum Kordzählwert Tc in dem Zentralteil (C) nicht weniger als 1,1 und nicht mehr als 3,0 beträgt.

**4.** Ein Reifen nach Anspruch 2,
dadurch **gekennzeichnet,**
daß das anfängliche Modulverhältnis Es/Rc des anfänglichen Elastizitätsmodul der Korde in den Lateralteilen Es zu dem anfänglichen Elastizitätsmodul 4der Korde in dem Zentralteil Ec nicht weniger als 1,1 und nicht mehr als 2,2 beträgt.

7

**5.** Ein Reifen nach Anspruch 2,
dadurch **gekennzeichnet,**
daß der Gürtel (10) zumindest eine Lage umfaßt, in welcher das Pickenverhältnis Ds/Dc der Korddicke Ds der Korde in den Lateralteilen (S) zu der Korddicke Dc der Korde in dem Zentralteil (C) nicht weniger als 1,1 und nicht mehr als 1,5 beträgt.

**6.** Ein Reifen nach Anspruch 2,
dadurch **gekennzeichnet,**
daß der Gürtel (10) zumindest eine Lage umfaßt, die gebildet wird, indem verschiedene Materialien für die Gürtelkorde in den Lateralteilen (S) und die Gürtelkorde in dem Zentralteil (C) verwendet werden.

**7.** Ein Reifen nach einem der Ansprüche 1 bis 6,
dadurch **gekennzeichnet,**
daß die Verbindungsstellen (K) in den Gürtellagen (10A) so verschoben sind, daß je weiter radial einwärts die Gürtellage (10A) angeordnet ist, dann je weiter axial auswärts die Verbindungsstelle (K) angeordnet ist.

**8.** Ein Reifen nach einem der Ansprüche 1 bis 6,
dadurch **gekennzeichnet,**
daß sequentiell von der radial innersten ersten Gürtellage (10A) zu der radial äußersten Gürtellage betrachtet, die Verbindungsstellen (K) der ungradzahlig numerierten Gürtellagen axial außerhalb der Verbindungsstellen der geradzahlig numerierten Gürtellagen angeordnet sind.

**Revendications**

**1.** Pneumatique à carcasse radiale pour poids lourds et pour vitesses élevées, comprenant une carcasse radiale (7) ayant au moins une nappe (7A, 7B) de câblés disposée avec un angle compris entre 70 et 90° par rapport à l'équateur (CO) du pneumatique et repliée aux deux bords autour de tringles (3) de manière qu'elle soit fixée à celles-ci, et une ceinture (10) composée d'au moins deux nappes (10A) de câblés parallèles faisant un angle compris entre 0 et 15° avec l'équateur (CO) du pneumatique, caractérisé en ce que chaque nappe de ceinture (10A) est composée d'une bande centrale (10aC) et de deux bandes latérales (10aS) formant un joint (K) entre la bande centrale (10aC) et chacune des deux bandes latérales (10aS), et les joints (K) des deux nappes au moins (10a) sont décalés dans la direction axiale du pneumatique et chaque nappe de ceinture (10a) a un nombre différent de câblés, un module initial d'élasticité différent des câblés et une épaisseur différente de câblés entre la bande centrale (10aC) et les deux bandes latérales (10aS) afin que la rigidité de la ceinture (10) à 9 810 N (1 000 kgf) soit inférieure, dans la partie centrale (C) à celle des parties latérales (S), la rigidité à 9 810 N (1 000 kgf) étant déterminée comme étant le rapport de la force à l'allongement résultant lorsque la ceinture est tirée initialement par une force de 9 810 N (1 000 kgf) par unité de largeur axiale égale à 1 cm.

**2.** Pneumatique selon la revendication 1, caractérisé en ce que la largeur axiale Ws de chaque partie latérale (S) n'est pas inférieure au cinquième ni supérieure au tiers de la largeur axiale totale (Wb) de la ceinture, et le rapport (Rs/Rc) de la rigidité à 9 810 N (1 000 kgf) (Rs) dans les parties latérales (S) et de la rigidité à 9 810 N (1 000 kgf) (Rc) de la partie centrale (C) n'est pas inférieur à 1,2 ni supérieur à 3,0.

**3.** Pneumatique selon la revendication 2, caractérisé en ce que la ceinture (10) comporte au moins une nappe dans laquelle le rapport Ts/Tc du nombre de câblés Ts dans les parties latérales (S) au nombre de câblés Tc dans la partie centrale (C) n'est pas inférieur à 1,1 ni supérieur à 3,0.

**4.** Pneumatique selon la revendication 2, caractérisé en ce que le rapport Es/Rc du module initial d'élasticité des câblés dans les parties latérales Es et du module initial d'élasticité des câblés dans la partie centrale Ec n'est pas inférieur à 1,1 ni supérieur à 2,2.

**5.** Pneumatique selon la revendication 2, caractérisé en ce que la ceinture (10) comporte au moins une nappe dans laquelle le rapport des épaisseurs Ds/Dc de l'épaisseur Ds des câblés des parties latérales (S) à l'épaisseur Dc des câblés de la partie centrale (C) n'est pas inférieur à 1,1 ni supérieur à 1,5.

**6.** Pneumatique selon la revendication 2, caractérisé en ce que la ceinture (10) comporte au moins une nappe formée par utilisation de différents matériaux pour les câblés de ceinture dans les parties latérales (S) et pour les câblés de ceinture dans la partie centrale (C).

**7.** Pneumatique selon l'une quelconque des revendications 1 à 6, caractérisé en ce que les joints (K) formés dans les nappes de ceinture (10A) sont décalés afin que plus la nappe de ceinture (10A) est déplacée radialement vers l'intérieur, plus le joint (K) est disposé axialement vers l'extérieur.

**8.** Pneumatique selon l'une quelconque des revendications 1 à 6, caractérisé en ce que, lorsqu'ils sont considérés successivement de la première nappe de ceinture (10A) radialement la plus interne à la nappe de ceinture radialement la plus externe, les joints (K) des nappes de ceinture de numéro impair sont placés axialement à l'extérieur des joints des nappes de ceinture de numéro pair.

# FIG.1

# FIG.2

# FIG.3